# EUROPEAN PATENT APPLICATION

(11) **EP 4 748 500 A1**
(43) Date of publication of application: **27.05.2026**
(21) Application number: 25196593.5
(22) Date of filing: 19.08.2025
(51) Int. Cl.: B05B 1/14, B05B 12/00, B05B 12/08, B05B 12/10, B05C 5/02, B05C 11/10, H01M 10/04

(54) **MULTI-COLUMN SLURRY SUPPLY APPARATUS AND METHOD**

(30) Priority: 22.11.2024 KR 20240168880
(71) Applicant: SAMSUNG SDI CO., LTD., Yongin-si, Gyeonggi-do 17084 (KR)
(72) Inventor: LEE, Seung Yeon, 16678 Suwon-si, Gyeonggi-do (KR); KIM, Gi Sung, 16678 Suwon-si, Gyeonggi-do (KR); LEE, Seung Hak, 16678 Suwon-si, Gyeonggi-do, (KR); JUNG, Rae Joon, 16678 Suwon-si, Gyeonggi-do, (KR); SEO, Won Sub, 16678 Suwon-si, Gyeonggi-do, (KR)
(74) Representative: Gulde & Partner

(57) **Abstract**

A multi-column slurry supply apparatus and method are disclosed. A multi-column slurry supply apparatus includes a slurry supplier, a manifold that branches a path of a slurry supplied from the slurry supplier into a plurality of paths and is configured to adjust a flow of the slurry, and a plurality of slot dies connected to the manifold and configured to spray the slurry on an electrode plate.

## Description

### BACKGROUND

### 1. Field

Aspects of embodiments of the present disclosure relate to a multi-column slurry supply apparatus and method.

### 2. Description of Related Art

With the recent rapid spread of electronic devices using batteries, such as mobile phones, laptop computers, and electric vehicles, the demand for secondary batteries having high energy density and high capacity has been rapidly increasing. Accordingly, research and development for improving performance of lithium secondary batteries is being actively conducted.

A lithium secondary battery is a battery including a positive electrode and a negative electrode, which include active materials capable of intercalating and deintercalating lithium ions, and an electrolyte, and produces electrical energy through an oxidation reaction and a reduction reaction when the lithium ions are intercalated into and deintercalated from the positive electrode and the negative electrode.

A battery electrode plate may be manufactured by applying a slurry including an active material, a binder, a conductive auxiliary agent, and a solvent on a substrate that is transferred in a roll-to-roll manner.

In the battery electrode plate manufactured as described above, a thickness of a layer formed on the substrate and including the active material may directly affect a charging/discharging amount of the battery, particularly, in a case of a high-capacity battery, it is very important to manage a thickness of a layer of the slurry applied to the substrate.

That is, it is desirable that the slurry be applied in a uniform thickness in a width direction and a transfer direction of the substrate.

The above information disclosed in this Background section is provided for enhancement of understanding of the background of the present disclosure, and, therefore, it may contain information that does not constitute related (or prior) art.

### SUMMARY

According to an aspect of embodiments of the present disclosure, a multi-column slurry supply apparatus and method are provided corresponding to the appended claims, in which a manifold unit capable of automatic column-specific flow rate control is applied to improve coating quality of a slurry and simplify a supply part.

The above and other aspects and features of the present disclosure will be described in or will be apparent from the following description of some embodiments of the present disclosure.

According to one or more embodiments of the present disclosure, a multi-column slurry supply apparatus is provided corresponding to the appended claims. The multi-column slurry supply apparatus includes a slurry supplier, a manifold that branches a path of a slurry supplied from the slurry supplier into a plurality of paths and is configured to adjust a flow of the slurry, and a plurality of slot dies connected to the manifold and configured to spray the slurry on an electrode plate.

The slurry supply part may include a storage tank in which the slurry is configured to be stored, a driving pump that is connected to the storage tank to apply a pressure to move the slurry, and a syringe that between the driving pump and the manifold and configured to measure and supply the slurry.

The multi-column slurry supply apparatus may further include a three-way valve between the driving pump and the syringe and configured to control a flow direction of the slurry.

The manifold may include a supply branch portion in which the slurry from the slurry supply part is configured to be introduced and which accommodates the slurry, a supply pipe connecting the supply branch portion and the slurry supplier, and a plurality of individual pipes in the supply branch portion and configured to supply the slurry to each of the slot dies.

The supply branch portion may include a guide configured to transfer the slurry introduced through the supply pipe at a uniform flow velocity through the plurality of individual pipes.

The guide may include an inclined surface of the supply branch portion connected to the supply pipe.

The manifold may be replaceable according to a viscosity of the slurry.

The individual pipe may include a fine adjusting unit configured to finely adjust a flow velocity of the slurry flowing through the individual pipe.

The fine adjusting unit may include a flow meter on the individual pipe and a proportional control valve configured to adjust an opening degree of the individual pipe according to a value measured by the flow meter.

The guide may include a pair of guide pieces hinge-connected to a surface of the supply branch portion and a driver configured to vary angles of the guide pieces.

The angles of the guide pieces may be configured to be varied according to a viscosity of the slurry.

The multi-column slurry supply apparatus may further include a flow meter in the individual pipe and configured to measure a flow velocity of the slurry, and the angles of the guide pieces may be configured to be varied according to the flow velocity of the slurry in the individual pipe measured by the flow meter.

The multi-column slurry supply apparatus may further include a flow meter in the individual pipe and configured to measure a flow velocity of the slurry, the individual pipe may include a proportional control valve configured to control the flow of the slurry, and the angles of the guide pieces or the proportional control valve may be controlled according to the flow velocity of the slurry in the individual pipe measured by the flow meter.

The multi-column slurry supply apparatus may further include sealing portions in contact (e.g., close contact) with an inner surface of the supply branch portion at ends of the guide pieces.

The slurry transferred from the manifold to the slot dies may be configured to be transferred at a uniform flow velocity due to lengths of the individual pipes.

The individual pipe may become shorter along a direction outward with respect to a same line of the supply pipe.

The supply pipe may be at a center of a surface of the supply branch portion, the individual pipes may be arranged on another surface of the supply branch portion, and the individual pipes may become shorter along a direction from a center of the another surface of the supply branch portion toward an outside.

The multi-column slurry supply apparatus may further include a fine adjusting unit in the individual pipe and configured to control a flow of the slurry, and the fine adjusting unit may include a flow meter in the individual pipe and a proportional control valve configured to adjust an opening degree of the individual pipe according to a value measured by the flow meter.

According to one or more embodiments of the present disclosure, a multi-column slurry supply method includes measuring a viscosity of a slurry stored in a storage tank, changing a flow of the slurry by a manifold unit, or manifold, according to the viscosity of the slurry, moving the slurry in the storage tank by operating a driving pump, measuring a flow velocity of the moving slurry which is branched to an individual pipe by the manifold unit, and making flow velocities of the slurry flowing through individual pipes uniform according to a value obtained by measuring the flow velocity of the slurry in the individual pipe.

A proportional control valve and a flow meter may be located in the individual pipe, and an opening degree of the individual pipe may be adjusted by the proportional control valve according to the flow velocity value measured by the flow meter.

### BRIEF DESCRIPTION OF THE DRAWINGS

The drawings included with this specification illustrate some embodiments of the present disclosure, and further describe aspects and features of the present disclosure together with the detailed description of the present disclosure. However, the present disclosure is not to be construed as being limited to the drawings.
FIG. 1 is a schematic view illustrating a configuration of a multi-column slurry supply apparatus according to an embodiment of the present disclosure;
FIG. 2 is a schematic view illustrating a manifold unit of the multi-column slurry supply apparatus according to an embodiment of the present disclosure;
FIG. 3 is a schematic view illustrating a manifold unit of a multi-column slurry supply apparatus according to another embodiment of the present disclosure;
FIG. 4 is a view illustrating an operation of the manifold unit of the multi-column slurry supply apparatus of FIG. 3;
FIG. 5 is a schematic view illustrating a manifold unit of a multi-column slurry supply apparatus according to another embodiment of the present disclosure;
FIG. 6 is a view illustrating coating by a multi-column slurry supply apparatus according to one or more embodiments of the present disclosure; and
FIG. 7 is a flowchart illustrating a multi-column slurry supply method according to one or more embodiments of the present disclosure.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as having meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being disposed (or located or positioned) on the "above (or below)" or "on (or under)" a component, it may mean that the arbitrary element is placed in contact with the upper (or lower) surface of the component and may also mean that another component may be interposed between the component and any arbitrary element disposed (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

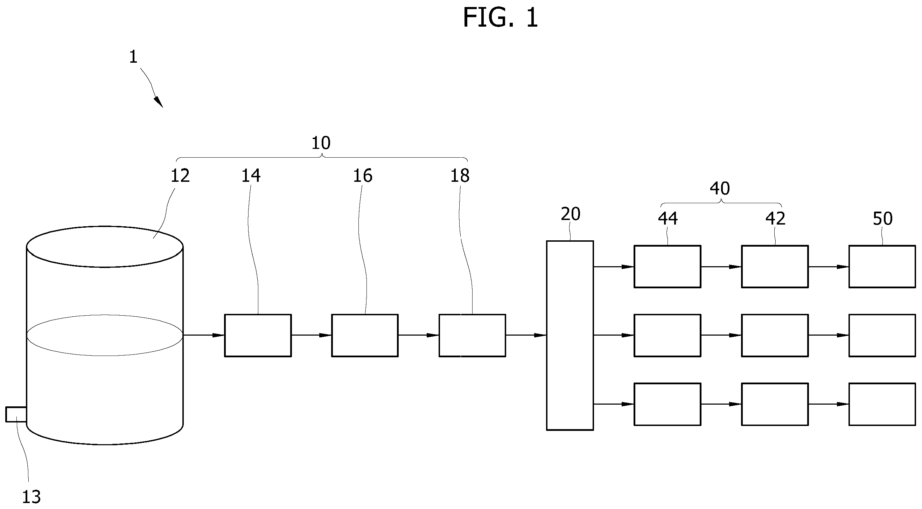

FIG. 1 is a schematic view illustrating a configuration of a multi-column slurry supply apparatus according to an embodiment of the present disclosure.

Referring to FIG. 1, a multi-column slurry supply apparatus 1 according to an embodiment of the present disclosure may include a slurry supply part, or slurry supplier, 10, a manifold unit, or manifold, 20, and a slot die 50.

In an embodiment, in the case of multi-column slurry coating, the slurry supply part 10 is provided according to a number of coating columns in which the number of components increases and control may complicated and, thus, to avoid this, the slurry supply part 10 may be configured by the manifold unit 20 as a single slurry supply part 10.

The slurry supply part 10 may include a storage tank 12, a driving pump 14, and a syringe unit, or syringe, 18.

In an embodiment, the storage tank 12, which is a tank in which a slurry is stored, may include a stirring device (not illustrated) to maintain a uniformly or substantially uniformly mixed state of the slurry therein.

In an embodiment, the slurry in the storage tank 12 contains solid particles, and the storage tank 12 may be worn when used for a long time, and, thus, in an embodiment, the storage tank 12 is made of a material having high wear resistance.

In general, since the slurry has high viscosity, the storage tank 12 may have a temperature control function to lower viscosity, thereby providing a smooth flow. In an embodiment, a heater or a cooling coil may be installed in the storage tank 12 to control a temperature, and a viscosity sensor 13 may be provided in the storage tank 12 to monitor the viscosity of the slurry in real time.

The driving pump 14 may be connected to the storage tank 12 and may function to apply a pressure to move the slurry.

In an embodiment, the driving pump 14 may move the slurry at a constant pressure. That is, the driving pump 14 may pump the slurry in the storage tank 12 and supply the slurry to the slot die 50.

The syringe unit 18 may be disposed between the driving pump 14 and the manifold unit 20 and function to measure and supply the slurry.

In an embodiment, the syringe unit 18 may inject the slurry in a manner of pushing and pulling a piston inside a sealed cylinder, and the piston may be controlled very precisely, such that an amount of the slurry may be accurately provided to the manifold unit 20.

In an embodiment, the syringe unit 18 may repeatedly provide a same amount of the slurry to the manifold unit 20 due to a feature that the piston always moves to same positions.

In an embodiment, a three-way valve 16 for controlling a flow direction of the slurry may be further provided between the driving pump 14 and the syringe unit 18.

The three-way valve 16, which is a valve capable of selectively controlling the flow of the slurry, may send flow of the slurry to another path. For example, in a slurry supply mode, the slurry may be directly supplied to the syringe unit 18 through the three-way valve 16, and in a slurry recovery mode, the slurry may be recovered to the storage tank 12 again without being supplied to the syringe unit 18 by switching the three-way valve 16. This may reduce waste by recovering remaining slurry if a slurry supply process is stopped or during cleaning.

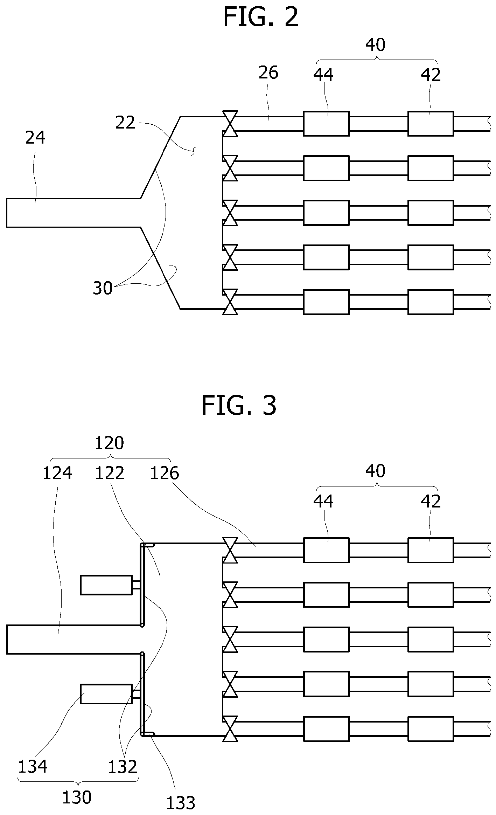

FIG. 2 is a schematic view illustrating a manifold unit 20 of the multi-column slurry supply apparatus according to an embodiment of the present disclosure.

Referring to FIG. 2, the manifold unit 20 according to an embodiment may branch a path of the slurry supplied from the slurry supply part 10 into a plurality of paths and adjust a flow of the slurry.

As an example, the manifold unit 20 may include a supply branch portion 22 in which the slurry from the slurry supply part 10 is introduced and which accommodates the slurry, a supply pipe 24 connecting the supply branch portion 22 and the slurry supply part 10, and a plurality of individual pipes 26 formed in the supply branch portion 22 to supply the slurry to each slot die 50.

The supply branch portion 22 may be further provided with a guide part 30 for transferring the slurry introduced through the supply pipe 24 at a uniform flow velocity through the plurality of individual pipes 26.

As illustrated in FIG. 2, the guide part 30 may be formed as an inclined surface of the supply branch portion 22 connected to the supply pipe 24. In an embodiment, the guide part 30 formed as an inclined surface may be formed as a rear end surface of the supply branch portion 22 which is an inclined surface symmetrically extending from the supply pipe 24 to a side surface of the supply branch portion 22.

An angle of the guide part 30 may prevent or substantially prevent differences in a pressure and a velocity of the slurry before the slurry flows into the individual pipes 26, the slurry may be naturally distributed along the guide part 30, and, thus, an amount and velocity of the slurry transferred to the individual pipes 26 may be uniformly or substantially uniformly maintained.

In an embodiment, the manifold unit 20 may be replaceable according to the viscosity of the slurry.

The guide part 30 of the manifold unit 20 may be configured at various angles, and the manifold unit 20 in which the guide part 30 having a corresponding angle is formed may be replaceable and applied according to the viscosity of the slurry.

The viscosity of the slurry may be measured by the viscosity sensor 13 provided in the storage tank 12, and the manifold unit 20 in which the guide part 30 having the corresponding angle is formed may be selected and applied by the measured value of the viscosity sensor 13.

In an embodiment, the individual pipe 26 may be further provided with a fine adjusting unit 40 for finely adjusting a flow velocity of a fluid flowing through the individual pipe 26.

In an embodiment, the fine adjusting unit 40 may include a flow meter 42 provided in the individual pipe 26 and a proportional control valve 44 configured to adjust an opening degree of the individual pipe 26 according to a value measured by the flow meter 42. In an embodiment, the proportional control valve 44 and the flow meter 42 may be arranged in the stated order in a longitudinal direction of the individual pipe 26.

The flow meter 42, which measures a flow velocity of the slurry, may measure the velocity of the slurry flowing through the individual pipe 26 by the flow meter 42. Further, the proportional control valve 44, which is a valve that precisely controls the flow of the slurry, may adjust the flow of the slurry in a proportional control method.

In further detail, the flow meter 42 may monitor the flow of the slurry in real time, transmit monitored data to the proportional control valve 44 when a flow rate is greater than a target flow rate and the velocity is greater than a target velocity, adjust the opening degree according to the data, adjust the flow to a desired level, and thus perform a control such that the slurry flows to the individual pipe 26 at an accurate flow rate and an accurate velocity.

Herein, a multi-column slurry supply apparatus according to another embodiment of the present disclosure will be described.

The multi-column slurry supply apparatus 1 according to the present embodiment may be different in terms of a configuration of the manifold unit 20 according to the previous embodiment of the present disclosure.

Accordingly, in describing the multi-column slurry supply apparatus 1 according to the present embodiment, only a detailed configuration of the manifold unit 20 different from that of the multi-column slurry supply apparatus 1 according to the previous embodiment of the present disclosure will be described.

The description of the multi-column slurry supply apparatus 1 according to the previous embodiment of the present disclosure may be applied to other components of the multi-column slurry supply apparatus 1 according to the present embodiment without change.

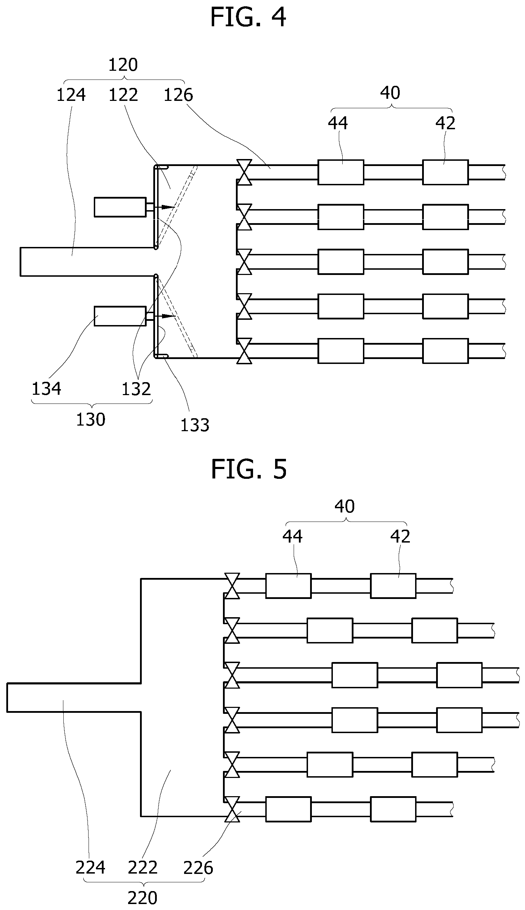

FIG. 3 is a schematic view illustrating a manifold unit of a multi-column slurry supply apparatus according to another embodiment of the present disclosure; and FIG. 4 is a view illustrating an operation of the manifold unit of the multi-column slurry supply apparatus of FIG. 3.

Referring to FIGS. 3 and 4, a manifold unit, or manifold, 120 according to the present embodiment may branch the slurry supplied from the slurry supply part 10 into a plurality of paths and adjust the flow of the slurry.

In further detail, the manifold unit 120 may include a supply branch portion 122 in which the slurry from the slurry supply part 10 is introduced and which accommodates the slurry, a supply pipe 124 connecting the supply branch portion 122 and the slurry supply part 10, and a plurality of individual pipes 126 formed in the supply branch portion 122 to supply the slurry to each slot die 50.

The supply branch portion 122 may be further provided with a guide part, or guide, 130 for transferring the slurry introduced through the supply pipe 124 at a uniform or substantially uniform flow velocity through the plurality of individual pipes 126.

The guide part 130 may include a pair of guide pieces 132 hinge-connected to a surface of the supply branch portion 122 and a driving unit, or driver, 134 configured to vary angles of the guide pieces 132.

The angle of the guide pieces 132 may be varied according to the viscosity of the slurry. The viscosity of the slurry may be measured by the viscosity sensor 13 provided in the storage tank 12, and the driving unit 134 may be operated by the measured value of the viscosity sensor 13 to adjust the angle of the guide pieces 132.

The guide pieces 132 may be formed to correspond to a rear surface of the supply branch portion 122. In an embodiment, the guide piece 132 may be provided as a pair of guide pieces 132 that are symmetrical to each other with respect to the supply pipe 124, and the angles thereof may be varied by the driving unit 134.

In an embodiment, the driving unit 134 may include a cylinder that is hinge-connected to the guide piece 132 to rotate the guide piece 132 about a hinge shaft.

The driving unit 134 is illustrated as the cylinder in the present embodiment, but the present disclosure is not limited thereto, and various modifications may be implemented within the technical possibilities of rotating the guide piece 132 around the hinge shaft, such as a driving motor that rotates the hinge shaft.

In an embodiment, the individual pipe 126 may be provided with the flow meter 42 for measuring the flow velocity of the slurry, and the angle of the guide piece 132 may be varied according to the flow velocity of the individual pipe 126 measured by the flow meter 42.

The flow meter 42, which measures the flow velocity of the slurry, may measure the velocity of the slurry flowing through the individual pipe 126 through the flow meter 42. In an embodiment, the individual pipe 126 may be provided with the proportional control valve 44 that controls the flow of the slurry.

The proportional control valve 44, which is a valve that precisely controls the flow of the slurry, may adjust the flow of the slurry in a proportional control method.

In further detail, the flow meter 42 may monitor the flow of the slurry in real time, transmit monitored data to the proportional control valve 44 when the flow rate is greater than the target flow rate and the velocity is greater than the target velocity, adjust the opening degree according to the data, adjust the flow to a desired level, and thus perform a control such that the slurry flows to the individual pipe 126 at an accurate amount and an accurate velocity.

In the present embodiment, the angle of the guide piece 132 may be changed according to the measured value measured by the flow meter 42, and the flow may be adjusted to a desired level while an opening degree of the proportional control valve 44 is adjusted. That is, if a deviation of the measured value of the individual pipe 126 measured by the flow meter 42 is large compared to the target flow rate and the target velocity, the angle of the guide piece 132 may be changed, and if the deviation is small, the opening degree of the proportional control valve 44 may be adjusted.

In an embodiment, a sealing portion 133 in close contact with an inner surface of the supply branch portion 122 may be further provided at an end of the guide piece 132. The sealing portion 133 may be made of a flexible material to maintain airtightness while in close contact with the inner surface of the supply branch portion 122, and may block a gap between the inner surface of the supply branch portion 122 and the end of the guide piece 132 generated by rotating the guide piece 132.

Herein, a multi-column slurry supply apparatus according to another embodiment of the present disclosure will be described.

The multi-column slurry supply apparatus 1 according to the present embodiment may be different in terms of a detailed configuration of the manifold unit 20 according to the embodiment of FIG. 2.

Accordingly, in describing the multi-column slurry supply apparatus 1 according to the present embodiment, only a detailed configuration of the manifold unit 20 different from that of the multi-column slurry supply apparatus 1 of FIG. 2 will be described.

The description of the multi-column slurry supply apparatus 1 of FIG. 2 may be applied to the other components of the multi-column slurry supply apparatus 1 according to the present embodiment without change.

FIG. 5 is a schematic view illustrating a manifold unit of a multi-column slurry supply apparatus according to another embodiment of the present disclosure.

Referring to FIG. 5, the slurry transferred from a manifold unit, or manifold, 220 to the slot dies 50 according to the present embodiment may be transferred at a uniform flow velocity due to lengths of individual pipes 226.

The manifold unit 220 according to the present embodiment may branch the slurry supplied from the slurry supply part 10 into a plurality of paths and adjust the flow of the slurry.

In further detail, the manifold unit 220 may include a supply branch portion 222 in which the slurry from the slurry supply part 10 is introduced and which accommodates the slurry, a supply pipe 224 connecting the supply branch portion 222 and the slurry supply part 10, and a plurality of individual pipes 226 formed in the supply branch portion 222 to supply the slurry to each slot die 50.

The individual pipe 226 according to the present embodiment may become shorter along a direction outward with respect to a same line of the supply pipe 24.

In further detail, as illustrated in FIG. 5, the supply pipe 224 may be disposed at a center of a surface of the supply branch portion 222, the individual pipe 226 may be disposed on the other surface of the supply branch portion 222, and the individual pipe 226 may become shorter along a direction from a center of the other surface of the supply branch portion 222 toward the outside. Thus, the slurry introduced into the supply branch portion 222 through the supply pipe 224 may be transferred to each individual pipe 226 at a uniform or substantially uniform amount and at a uniform or substantially uniform pressure.

The individual pipe 226 may be further provided with the fine adjusting unit 40 for finely adjusting a flow velocity of a fluid flowing through the individual pipe 226.

In an embodiment, the fine adjusting unit 40 may include the flow meter 42 provided in the individual pipe 226 and the proportional control valve 44 for adjusting the opening degree of the individual pipe 226 according to the value measured by the flow meter 42. The proportional control valve 44 and the flow meter 42 may be arranged in the stated order in a longitudinal direction of the individual pipe 226.

The flow meter 42, which measures the flow velocity of the slurry, may measure the velocity of the slurry flowing through the individual pipe 226 by the flow meter 42. Further, the proportional control valve 44, which is a valve that precisely controls the flow of the slurry, may adjust the flow of the slurry in a proportional control method.

In further detail, the flow meter 42 may monitor the flow of the slurry in real time, transmit monitored data to the proportional control valve 44 if the flow rate is greater than the target flow rate and the velocity is faster than the target velocity, adjust the opening degree according to the data, adjust the flow to a desired level, and thus perform a control such that the slurry flows to the individual pipe 226 at an accurate amount and an accurate velocity.

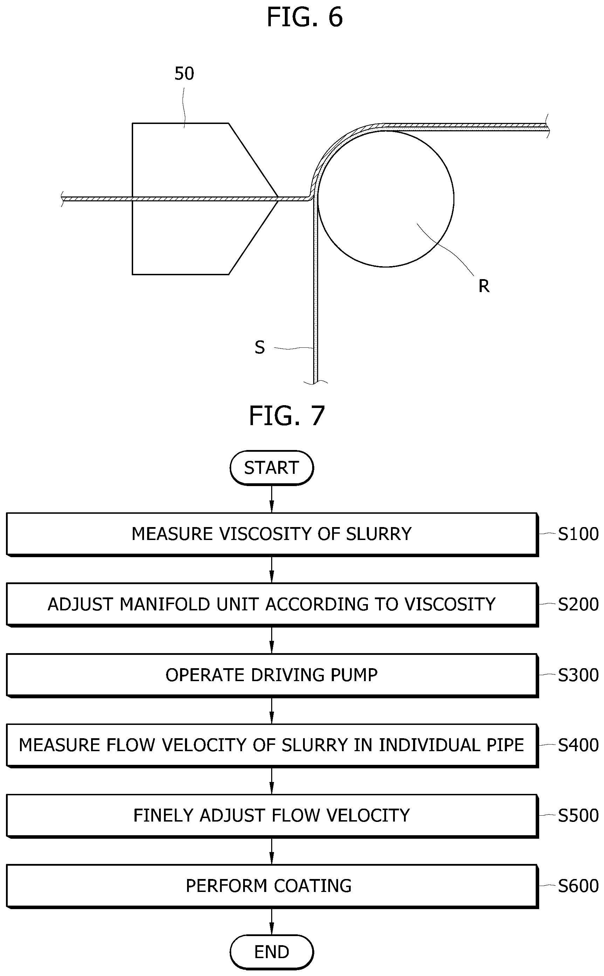

FIG. 6 is a view illustrating coating by a multi-column slurry supply apparatus according to one or more embodiments of the present disclosure.

Referring to FIG. 6, the individual pipe 26 is provided with the slot die 50.

The slot die 50 according to an embodiment may be disposed at a side of a coating roller R, discharge the slurry on a substrate S supplied from an unwinding roller, and thus concurrently (e.g., simultaneously) perform multi-column coating by each slot die 50.

In further detail, the flat substrate S may be transferred in a roll-to-roll manner and coated by the slurry discharged from the slot die 50 at the coating roller R. The slot die 50 may be configured to coat the slurry with a desired thickness and a uniform or substantially uniform distribution, discharge the slurry through a very small slot, and thus perform the coating in a desired thickness and a desired width.

The slurry inside the slot die 50 may be designed to be maintained at a constant pressure, and a coating thickness may vary depending on a distance between the slot and a coating surface.

Herein, a multi-column slurry supply method according to an embodiment of the present disclosure will be described as follows.

FIG. 7 is a flowchart illustrating a multi-column slurry supply method according to one or more embodiments of the present disclosure.

Referring to FIGS. 1 to 7, in a multi-column slurry supply method, a viscosity of a slurry stored in the storage tank 12 is measured (S100). The viscosity sensor 13 may be provided in the storage tank 12 in which the slurry is stored, and the viscosity of the slurry may be measured by the viscosity sensor 13. In an embodiment, a stirrer (not illustrated) may be provided inside the storage tank 12 to maintain the slurry in a uniform mixing state.

Thereafter, the flow of the slurry is adjusted or changed by the manifold unit 20 according to the viscosity of the slurry (S200). The flow of the slurry may be adjusted or changed in various manners.

As illustrated in FIGS. 2 and 5, the manifold unit 20 may be replaced. Referring to FIG. 2, the guide part 30 having a certain angle (e.g., a predetermined angle) may be provided in the supply branch portion 22 of the manifold unit 20, and the manifold unit 20 in which the guide part 30 having a corresponding angle is formed may be selected and applied according to the viscosity of the slurry.

Further, as illustrated in FIG. 5, the manifold unit 220 including the plurality of individual pipes 226 having different lengths may be selected and applied.

In an embodiment, as illustrated in FIGS. 3 and 4, the angle of the guide piece 132 may be changed.

The angle of the guide piece 132 may be varied according to the viscosity of the slurry. The angle of the guide piece 132 may be adjusted by operating the driving unit 134 by the measured value measured by the viscosity sensor 13, and, thus, the flow of the slurry may be adjusted or changed.

Thereafter, the slurry in the storage tank 12 is moved by operating the driving pump 14 (S300). By operating the driving pump 14, the slurry may be moved at a constant pressure and supplied to the slot die 50.

The syringe unit 18 may be provided between the driving pump 14 and the manifold unit 20, 120, or 220 to measure the slurry and provide an accurate amount of the slurry to the manifold unit 20, 120, or 220.

The three-way valve 16 for controlling the flow direction of the slurry may be further provided between the driving pump 14 and the syringe unit 18.

The three-way valve 16 is a valve that may selectively control the flow of the slurry. In a slurry supply mode, the slurry may be directly supplied to the syringe unit 18 through the three-way valve 16, and in a slurry recovery mode, the slurry may be recovered to the storage tank 12 again without being supplied to the syringe unit 18 by switching the three-way valve 16.

Thereafter, the slurry branches and moves into the individual pipe 26, 126, or 226 by the manifold unit 20, 120, or 220, and the flow velocity of the slurry of the individual pipe 26, 126, or 226 is measured by the flow meter 42 provided in the individual pipe 26, 126, or 226 (S400).

Further, the flow velocities of the slurry flowing through the individual pipes 26 may be uniformly or substantially uniformly controlled by the proportional control valve 44 according to a value of the flow velocity measured by the individual pipe 26, 126, or 226.

In an embodiment, the flow meter 42 may monitor the flow of the slurry in real time, transmit monitored data to the proportional control valve 44 if the flow rate is greater than the target flow rate and the velocity is greater than the target velocity, adjust the opening degree according to the data, adjust the flow to a desired level, and thus perform a control such that the slurry flows to the individual pipe 26, 126, or 226 at an accurate amount and an accurate velocity (S500).

Thereafter, the slurry flowing through the individual pipe 26, 126, or 226 may be transferred to the slot die 50, and the substrate S transferred in a roll-to-roll manner may be coated with the slurry discharged from the slot die 50 in a uniform or substantially uniform thickness and uniform or substantially uniform distribution (S600).

As described above, a single slurry supply part may be configured by applying the manifold unit instead of adjusting the flow rate through a revolution per minute (RPM) of each pump, and, thus, the supply part can be simplified, and coating quality can be improved. Further, the fine adjusting unit may be provided at a rear end of the manifold unit, the flow rate can be more precisely controlled together with the manifold unit, and, thus, coating quality of the slurry can be improved.

According to one or more embodiments of the present disclosure, a single slurry supply part can be configured by applying a manifold unit instead of adjusting the flow rate through an RPM of each pump, and, thus, the supply part can be simplified, and coating quality can be improved.

According to one or more embodiments of the present disclosure, a fine adjusting unit may be provided at a rear end of a manifold unit, a flow rate can be more precisely controlled together with the manifold unit, and, thus, coating quality of the slurry can be improved.

However, aspects and effects obtainable through the present disclosure are not limited to the above aspects and effects, and other technical aspects and effects that are not mentioned will be clearly understood by those skilled in the art from the following description of the present disclosure.

While the present disclosure has been described with reference to some embodiments shown in the drawings, these embodiments are merely illustrative and it is to be understood that various modifications and equivalent other embodiments can be derived by those skilled in the art on the basis of the embodiments, within the scope of the appended claims.

Therefore, the technical scope of the present disclosure should be defined by the claims.

## Claims

1. A multi-column slurry supply apparatus (1) comprising:
a slurry supplier (10);
a manifold (20) that branches a path of a slurry supplied from the slurry supplier into a plurality of paths and is configured to adjust a flow of the slurry; and
a plurality of slot dies (50) connected to the manifold and configured to spray the slurry on an electrode plate.

2. The multi-column slurry supply apparatus as claimed in claim 1, wherein the slurry supplier comprises:
a storage tank (12) in which the slurry is configured to be stored;
a driving pump (14) connected to the storage tank and configured to apply a pressure to move the slurry; and
a syringe (18) arranged between the driving pump and the manifold and configured to measure and supply the slurry.

3. The multi-column slurry supply apparatus as claimed in claim 2, further comprising a three-way valve (16) between the driving pump and the syringe and configured to control a flow direction of the slurry.

4. The multi-column slurry supply apparatus as claimed in any of claims claim 1 to 3, wherein the manifold comprises:
a supply branch portion (22) in which the slurry from the slurry supplier is introduced and which accommodates the slurry;
a supply pipe (24) connecting the supply branch portion and the slurry supplier; and
a plurality of individual pipes (26) in the supply branch portion and configured to supply the slurry to each of the slot dies.

5. The multi-column slurry supply apparatus as claimed in claim 4, wherein the supply branch portion comprises a guide (30) configured to transfer the slurry introduced through the supply pipe at a uniform flow velocity through the plurality of individual pipes.

6. The multi-column slurry supply apparatus as claimed in claim 5, wherein the guide comprises an inclined surface of the supply branch portion connected to the supply pipe.

7. The multi-column slurry supply apparatus as claimed in claims 5 or 6, wherein the manifold is replaceable according to a viscosity of the slurry.

8. The multi-column slurry supply apparatus as claimed in claim 5, wherein the guide comprises:
a pair of guide pieces (132) hinge-connected to a surface of the supply branch portion; and
a driver (134) configured to vary angles of the guide pieces.

9. The multi-column slurry supply apparatus as claimed in claim 8, wherein the angles of the guide pieces are configured to be varied according to a viscosity of the slurry.

10. The multi-column slurry supply apparatus as claimed in claims 8 or 9, further comprising a flow meter (42) in the individual pipe and configured to measure a flow velocity of the slurry, and
the angles of the guide pieces are configured to be varied according to the flow velocity of the slurry in the individual pipe measured by the flow meter.

11. The multi-column slurry supply apparatus as claimed in claim 8, further comprising a flow meter (42) in the individual pipe and configured to measure a flow velocity of the slurry; and
a proportional control valve (44) in the individual pipe and configured to control a flow of the slurry, and
the angles of the guide pieces or the proportional control valve is controlled according to the flow velocity of the slurry in the individual pipe measured by the flow meter.

12. The multi-column slurry supply apparatus as claimed in any of claims 8 to 11, further comprising sealing portions (133) in contact with an inner surface of the supply branch portion at ends of the guide pieces.

13. The multi-column slurry supply apparatus as claimed in claim 8, further comprising a fine adjusting unit (40) in the individual pipe and configured to control a flow of the slurry, wherein the fine adjusting unit comprises:
a flow meter (42) in the individual pipe; and
a proportional control valve (44) configured to adjust an opening degree of the individual pipe according to a value measured by the flow meter.

14. The multi-column slurry supply apparatus as claimed in any of claims claim 4 to 9, further comprising a fine adjusting unit (40) in the individual pipe and configured to finely adjust a flow velocity of the slurry flowing through the individual pipe.

15. The multi-column slurry supply apparatus as claimed in claim 14, wherein the fine adjusting unit comprises:
a flow meter (42) on the individual pipe; and
a proportional control valve (44) configured to adjust an opening degree of the individual pipe according to a value measured by the flow meter.
